Europäisches Patentamt

European Patent Office

Office européen des brevets

(11) Publication number: **0 410 653 A2**

# EUROPEAN PATENT APPLICATION

(21) Application number: 90307945.7

(51) Int. Cl.5: **H04N 3/15**

(22) Date of filing: **20.07.90**

(30) Priority: **25.07.89 JP 193496/89**

(43) Date of publication of application:
**30.01.91 Bulletin 91/05**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Mukainakano, Hiroshi**
**c/o Seiko Instruments Inc., 31-1 Kameido**
**6-chome**

**Koto-ku, Tokyo(JP)**
Inventor: **Kawahara, Yukito**
**c/o Seiko Instruments Inc., 31-1 Kameido**
**6-chome**
**Koto-ku, Tokyo(JP)**
Inventor: **Machida, Satoshi**
**c/o Seiko Instruments Inc., 31-1 Kameido**
**6-chome**
**Koto-ku, Tokyo(JP)**

(74) Representative: **Caro, William Egerton et al**
**J. MILLER & CO. Lincoln House 296-302 High**
**Holbornorn**
**London WC1V 7JH(GB)**

(54) **Semi-conductor image sensing device.**

(57) A semi-conductor image sensing device formed on a common semi-conductor substrate of one conductivity type comprises an array (1) of photo-detecting elements, a read out circuit (2) for sequentially reading out an output signal from each photo-detecting element, and an amplifying circuit (3) for voltage converting the read out output signal. A voltage regulator 4 applies a constant voltage ($V_{DD2}$) effective to drive the array (1) of photo-detecting elements and the read out circuit (2).

FIG. 1

## SEMI-CONDUCTOR IMAGE SENSING DEVICE

The present invention relates to semi-conductor image sensing devices for receiving reflected light from an image source illuminated by incident light to convert the received light into a corresponding electric signal.

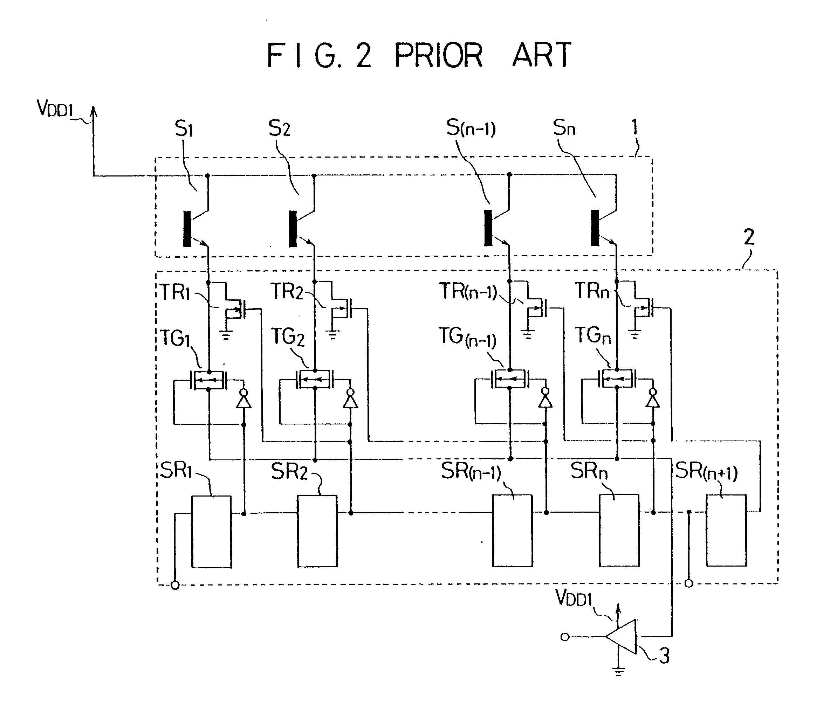

Figure 2 is a circuit diagram of a conventional semi-conductor image sensing device. Incident light to the semi-conductor image sensing device is converted into a corresponding electric signal by an array 1 of photo-detectors. However, the electric signal converted by the array 1 of photo-detectors is rather weak and therefore may be affected by noise generated by a read out circuit 2. In the circuit 2, each analog switch is formed of a MOS transistor TGn, hence it causes, due to parasitic capacitance between gate and drain during transitional response, a noise spike which in parts change in the signal of the corresponding photo-detector Sn. This noise increases when the MOS transistor TGn is driven by a higher power source voltage.

There is generally utilised a technology whereby the electric signal from the array 1 of photo-detectors is voltage-converted so as to avoid reduction of output due to external load capacitance and external load resistance. This voltage conversion is generally carried out by a source-follower circuit or operational amplifier.

However, an operational amplifier needs a wide dynamic range in order to transfer the signal output from the photo-detector without distortion. The dynamic range of the operational amplifier varies depending on the magnitude of the power source voltage. The higher the power source voltage, the wider the dynamic range. On the other hand, when increasing the power source voltage of the read out circuit 2, a large noise is superposed on a signal line through parasitic capacitance and gate-drain capacitance as described above thereby to reduce S/N ratio. Namely, in the conventional semi-conductor image sensing device, when the power source voltage is increased, the noise increases. When the power source voltage is reduced, the dynamic range is reduced to hinder performance

The present invention seeks to provide a semi-conductor image sensing device where an operational amplifier and a read out circuit are powered by two different power source voltages.

According to the present invention, there is provided a semi-conductor image sensing device formed on a common semi-conductor substrate of one conductivity type, comprising: an array of photo-detecting elements; a read out circuit for sequentially reading out an output from each photo-detecting element; and an amplifying circuit for voltage converting the read out signal; characterised by a voltage regulator or applying a constant voltage effective to drive the array of photo-detecting elements and the read out circuit.

Preferably the arrangement is such that, in operation, the voltage regulator is powered by a higher voltage than the said constant voltage.

Further the arrangement may be such that the amplifying circuit is powered by said higher voltage.

In one embodiment one or more of the read out circuit, amplifying circuit and voltage regulator are formed of CMOS transistors or bipolar transistors.

If the read out circuit is driven by a power source voltage lower than that in the conventional semi-conductor image sensing device, current consumption may be reduced.

The invention is illustrated, merely by way of example, in the accompanying drawings, in which:-

Figure 1 is a circuit diagram showing a semi-conductor image sensing device according to the present invention; and

Figure 2 is a circuit diagram showing a conventional semi-conductor image sensing device.

In the drawings like parts have been designated by the same reference numerals.

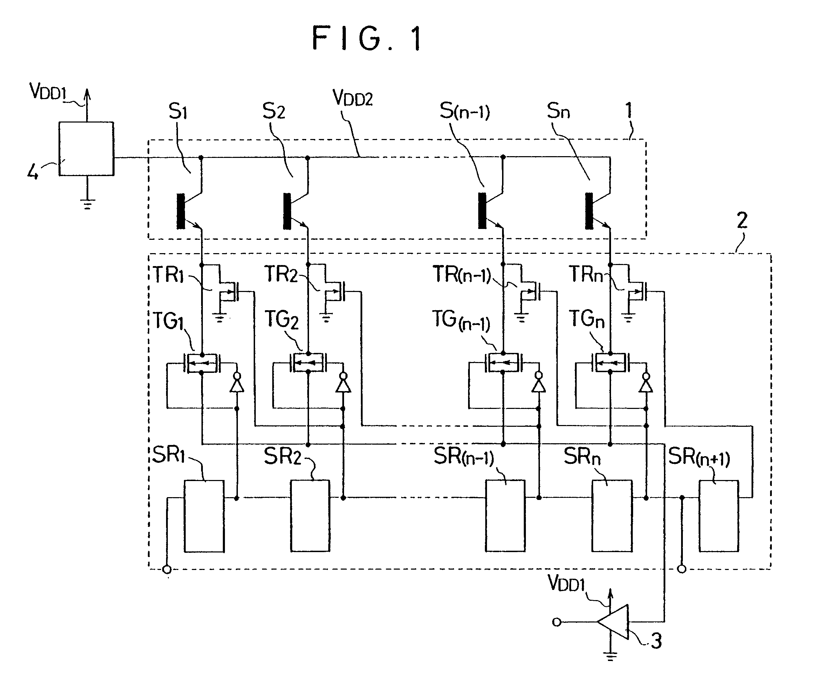

Figure 1 is a circuit diagram of one embodiment of a semi-conductor image sensing device according to the present invention. An array 1 of photo-detectors in the form of photo-transistors, a read out circuit 2, an operational amplifier 3 and a voltage regulator 4 are formed on a common single crystal semi-conductor substrate of one conductivity type. The read out circuit 2 is comprised of reset transistors TRn, transmission gates TGn and shift registers SRn. Each re-set transistor TRn operates to re-set a corresponding photo-detector at a constant voltage.

Reading of the signal is carried out as follows. Namely, a signal of the first photo-detector $S_1$ is outputted through the corresponding transmission gate $TR_1$ which is placed in an operating condition pon receipt of command data in the first shift register $SR_1$. The outputted signal is amplified by the operational amplifier 3 and is then fed out externally. The data of the first shift register $SR_1$ is shifted to a subsequent stage so as to sequentially read out a signal from each photo-detector. The integrated voltage regulator 4 supplies a power source voltage $V_{DD2}$ to the read out circuit and to the array of photo-detectors. The voltage regulator 4 is driven or powered by another power source voltage $V_{DD1}$, which can also be commonly used to power the operational amplifier 3. Therefore, the semi-conductor image sensing device can be supplied with a single power source voltage $V_{DD1}$ where $V_{DD1} > V_{DD2}$.

The read out circuit 2 is comprised of CMOS transistors in this embodiment. Alternatively the read out circuit can be composed of bipolar transistors. Further, the operational amplifier 3 and the voltage regulator 4 can be formed of CMOS transistors or bipolar transistors. Consequently, a semi-conductor image sensing device can be manufactured without changing conventional semi-conductor fabrication techniques and additional fabrication steps can be avoided.

As described above, the driving voltage of the read out circuit 2 is reduced to suppress the noise of the signal line and to obtain a high S/N ratio, thereby obtaining an advantageous semi-conductor image sensing device having lower current consumption and wide dynamic range.

**Claims**

1. A semi-conductor image sensing device formed on a common semi-conductor substrate of one conduct type, comprising: an array (1) of photo-detecting elements; a read out circuit (2) for sequentially reading out an output from each photo-detecting element; and an amplifying circuit (3) for voltage converting the read out signal; characterised by a voltage regulator (4) for applying a constant voltage ($V_{DD2}$) effective to drive the array (1) of photo-detecting element and the read out circuit (2).

2. A semi-conductor image sensing device as claimed in claim 1 characterised in that the arrangement is such that, in operation, the voltage regulator (4) is powered by a higher voltage than the said constant voltage.

3. A semi-conductor image sensing device as claimed in claim 2 characterised in that the arrangement is such that the amplifying circuit (3) is powered by said higher voltage.

4. A semi-conductor image sensing device as claimed in any preceding claim characterised in that any one or more of the read out circuit (2), amplifying circuit (3) and voltage regulator (4) are formed of CMOS transistors or bipolar transistors.

# FIG. 1

EP 0 410 653 A2

F I G. 2  PRIOR  ART

EP 0 410 653 A2